# EUROPEAN PATENT SPECIFICATION

(11) **EP 1 241 023 B1**
(45) Date of publication and mention of the grant of the patent: **09.07.2008**
(21) Application number: 02005884.8
(22) Date of filing: 14.03.2002
(51) Int. Cl.: B60B 3/10, B60B 3/06

(54) **Light alloy wheel**
Leichtmetallrad
Roue de véhicule en alliage léger

(30) Priority: 16.03.2001 JP 2001076470
(43) Date of publication of application: 18.09.2002
(73) Proprietor: Sumitomo Rubber Industries, Ltd., Kobe-shi, Hyogo-ken (JP)
(72) Inventor: Kubota, Yasuhiro, c/o Sumitomo Rubber Industries, Ltd., Kobe-shi, Hyogo-ken (JP)
(74) Representative: Manitz, Finsterwald & Partner GbR

(56) References cited:
- GB-A- 1 230 169
- US-A- 3 528 706

## Description

The present invention relates to a light alloy wheel for automobile, more particularly to an improved disk part between the rim and hub in which an effective weight reduction can be achieved while improving the road noise performance.

In recent years, from a point of view of severe requirements for automobiles' fuel consumption, even in light alloy wheels such as aluminum wheels, the weight requires being reduced as thoroughly as possible.

On the other hand, so called road noise, which is heard in the automobiles running on a relatively rough asphalt road surface and ranges from about 100 Hz to about 400 Hz, has a tendency to increase as the wheel becomes light in weight.

A light alloy wheel according to the preamble of claim 1 is disclosed by GB-A-1230169.

It is therefore, an object of the present invention to provide a light alloy wheel, in which the wheel weight and the road noise are effectively reduced at the same time.

This object is achieved by a light alloy wheel having the features of claim 1.

An embodiment of the present invention will now be described in detail in conjunction with the accompanying drawings.
Fig.1 is a front view of a light alloy wheel according to the present invention.
Fig.2 is a cross sectional view taken along a line I-I in Fig.1.
Fig.3 is a diagram for explaining the frontal projected area (A) of openings formed between the spoke parts.
Fig.4 is a diagram for explaining the area (S) of a circle whose diameter is equal to the nominal diameter of the rim.
Fig.5 is a diagram for explaining bending deformation of a disk part of a wheel.
Fig.6 is a graph showing relationship among the road noise, a weight index K and an area ratio A/S.
Fig.7 is a graph showing correlation between wheel mass M and the sum of rim width w and rim diameter D.
Fig.8 shows a conventional wheel structure.

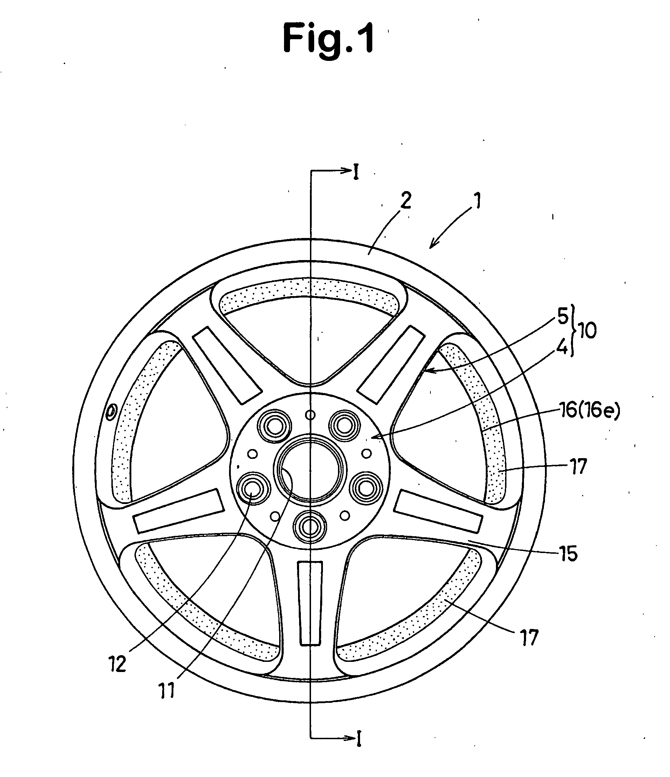

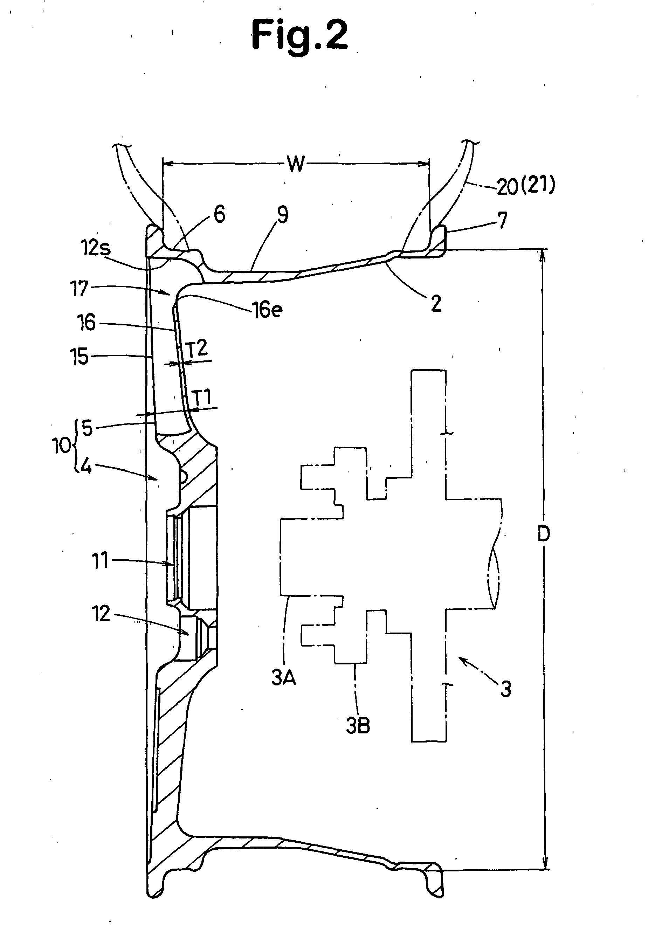

In Figs.1 and 2, light alloy wheel 1 according to the present invention is a one-piece molding of an aluminum alloy.

The wheel 1 comprises a rim 2 on which a pneumatic tire 20 is mounted, a hub 4 to which an axle 3 of an automobile is connected, and a disk part 5 between the rim 2 and the hub 4.

The rim 2 comprises a pair of bead seats 6 on which the respective beads 21 of the tire 20 seat, a pair of flanges 7 each extending radially outwards from the axially outer end of one of the bead seats 6, and a drop center or rim well 9 between the bead seats 6.

The above-mentioned hub 4 is a substantially circular rigid part which is provided with a center bore 11 into which an end 3A of the axle 3 of an automobile is inserted, and a plurality of bolt holes 12 around the center core 11 for fixing nut bolts.

The disk part 5 is made up of spoke parts 15 equiangularly disposed around the hub 4 and extend from the hub 4 to the rim 2, and fin parts 16 between the spoke parts 15.

The fin parts 16 are provided in order to improve noise performance. with respect to the radial direction, each of the fin parts 16 in this embodiment extends radially outwards from the hub 4 but terminates before the rim 2 so that an opening 17 like an arced through slit is formed between the outer edge 16e and the radially inner circumferential surface 2s of the rim 2. with respect to the circumferential direction, on the other hand, each fin part 16 extends from one of the spoke parts 15 to the adjacent spoke part 15. The radially outer edge 16e of each of the fin parts 16 is convexly curved. In this example, the radially outer edges 16e collectively describe a circle as shown in Fig.1. This sector fin part 16 connects with the adjacent spoke parts 15 along their side edges or the edges other than the outer edges 16e.

The number of the spoke parts 15 is set in a range of more than 4 but not more than 12 from a point of view of weight reduction. Preferably, the number is 5 or 7.

The spoke parts 15 preferably have a thickness T1 in a range of from about 17 mm to about 22 mm for rigidity and load bearing capacity. The thickness T1 in this example is slightly decreased from the hub 4 to the rim 2. But, it is also possible that the thickness T1 is constant over the length (or the radial extent). On the other hand, the circumferential width of each spoke part 15 gradually decreases from the hub 4 to the rim 2.

The fin parts 16 preferably have a thickness T2 in a range of from about 1.5 to about 5.0 mm. Although the thickness T2 is substantially constant in this example, it is possible to gradually increase the thickness T2 from the radially outside to the inside. In this case, the rigidity of the fin parts 16 may be improved.

The thickness T2 of the fin parts 16 may be set in a range of not more than 15% but more than 5 % of the thickness T1 of the spoke parts 15. In case of a variable thickness, an average thickness which is the quotient of the volume of the object divided by the frontal projected area (A) thereof may be used as the thickness T1, T2.

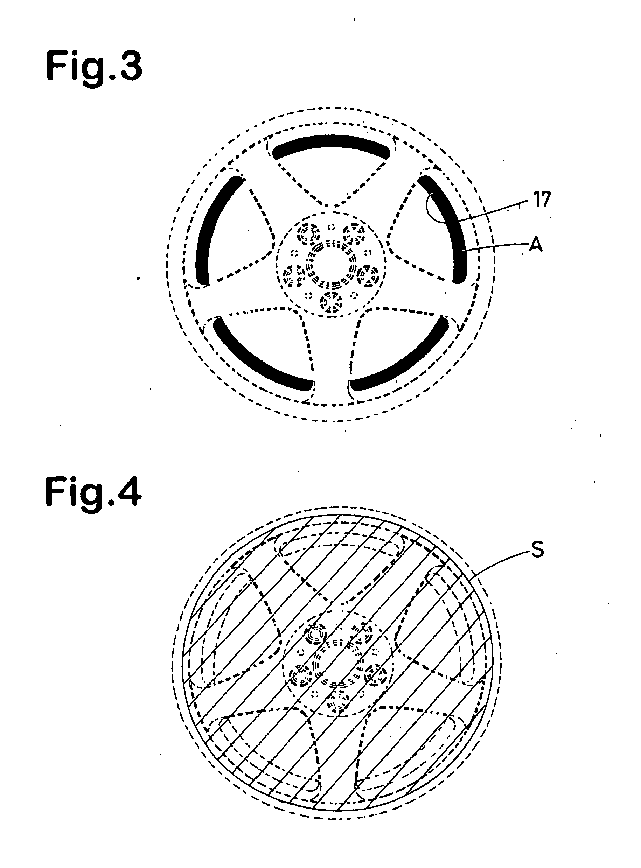

As to the size of the above-mentioned openings 17, when viewed in the axial direction as shown in Figs.3 and 4, the total frontal projected area (A) of the openings 17 (see Fig.3 wherein the openings are painted over with black) is set in a range of from 0 to 25 %, preferably 0 to 20 %, more preferably 0 to 10 % of the area (S) of a circle whose diameter is equal to the nominal diameter D of the rim 2 (see Fig.4 wherein the area is hatched).

Further, the nominal rim diameter D in inch, the nominal rim width w in inch and the mass M in kilogram of the wheel satisfy the following condition: 0.35 ≤ M/(W+D-10) ≤ 0.55.

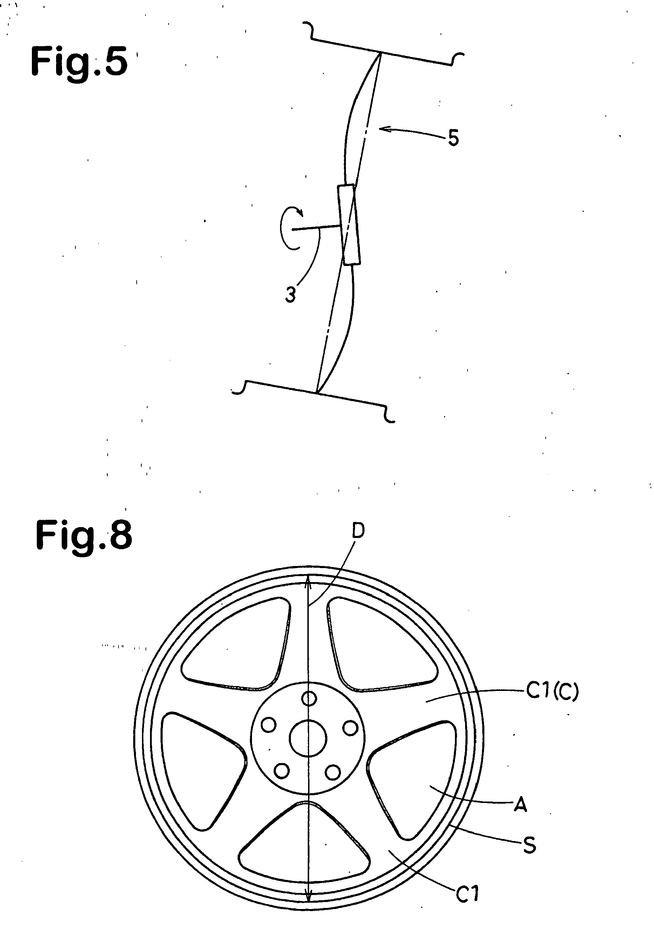

If the above-mentioned fin parts are not formed between the spoke parts 15, the disk part 5 is liable to be bent as shown in Fig.5 (the deformation is exaggerated) by the force which the tire receives from the road during running. The primary resonance mode of such bending deformation occurs in a frequency range of from about 300 Hz to about 700 Hz. This frequency range is close to or overlaps with the frequency range of the road noise which is about 100 Hz to about 400 Hz. Accordingly, the vibration is transmitted to the vehicle body and the noise level is increased. Therefore, if the resonance frequency can be increased, the road noise is reduced.

The fin parts 16 connect the adjacent spoke parts 15 each other and decrease the bending deformation of the spoke parts 15. Further, the fin parts 16 alter the resonance modes towards high frequency because free edges of the spoke parts 15 are decreased. As a result, the amplitude of the vibrations becomes smaller and the resonance frequency becomes higher, and the road noise is reduced. Furthermore, as the fin parts 16 increase the rigidity of the disk part 5 as a whole, the steering stability is also improved.

If the fin parts 16 are undulated or corrugated, since they are thin, the above-mentioned advantageous effects are difficult to obtain. Therefore, it is preferable that the fin part 16 is flat and platy.

If the fin parts 16 are too thin in comparison with the spoke parts 15 such that the thickness T2 is less than 5 % of the thickness T1, the strength of the fin parts 16 becomes insufficient and it is difficult to decrease the bending deformation and alter the resonance modes. Further, cracks are liable to occur. on the other hand, if the thickness T2 is more than 15% of the thickness T1, it becomes difficult to attain the main object which is to reduce the weight.

If the outer edge 16e of the fin part 16 is straight, as the fin part 16 is subjected to a large tensile stress between the spoke parts 15 during running, cracks are liable to occur. If the outer edge 16e is concavely curved, the tying effect (the effect to tie the adjacent spoke parts 15 each other) decreases and it is difficult to obtain the above advantageous results. when the outer edge 16e is convexly curved as in this example, the resistance to crack due to tensile stress is increased, and the maximum tying effect can be derived from the fin part 16.

If the above-mentioned openings becomes larger, as the fin parts 16 becomes smaller, it becomes difficult to obtain the above-mentioned advantageous results. Therefore, the area ratio A/S is limited to under 0.25.

As the number of the spoke parts 15 is at least five, the angle between the spoke parts 15 becomes less than 90 degrees. If the angle is 90 degrees or more, the fin part 16 can not fully display the tying effect, and the effect on changing the resonance mode becomes small because the fin part becomes broad and the bending rigidity decreases.

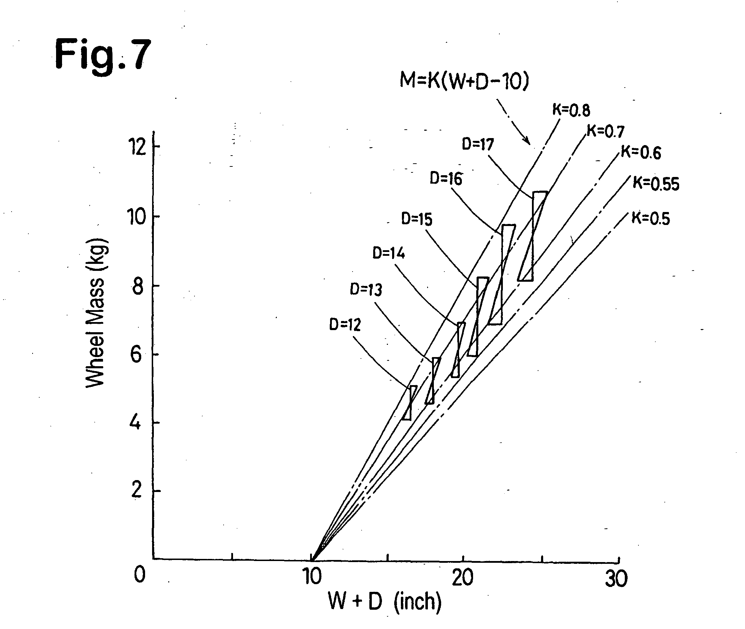

The wheel mass M correlates closely with the value W+D-10 (D: rim dia., W: rim width) as shown in Fig.7. If a weight index K which is defined as M/(W+D-10) is small, it can be said that the degree of weight reduction is high.

In a conventional wheel structure shown in Fig.8 of which disk part consists of spoke parts C1 only, the above-mentioned weight index K ranges from about 0.55 to about 0.85, and if the weight index K is lowered under 0.55, the road noise increases. In the present invention, however, even if the weight index K is decreased into a range of from 0.55 to 0.35, the road noise can be improved as explained above. Therefore, the subject of the present invention is a light weight wheel whose weight index K is in the range of from 0.55 to 0.35.

### Comparison Test

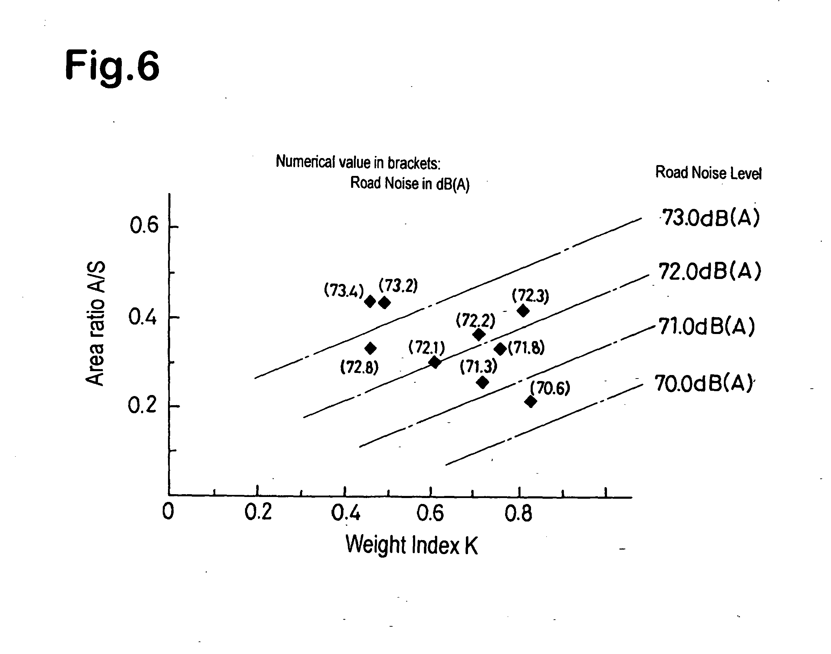

Aluminum wheels having the basic structure shown in Figs.1 and 2 were made and tested for road noise performance.
In the road noise performance test, a 2000cc front engine rear drive passenger car provided with an assembly of a test wheel and a radial tire (as all the four wheels) was run on an asphalt road in a road noise test course at a speed of 60 km/hr, and the overall noise level dB(A) was measured in the car at a fixed position close to the inside ear of the driver.
The test results are shown in Table 1 and Fig.6.
wheel rim size: 17X7JJ
Tire size: 215/45ZR17
Tire pressure: 230 kPa

**Table 1**

| wheel | Ref.1 | Ref.2 | Ref.3 | Ex.1 | Ex.2 | Ex.3 |
|---|---|---|---|---|---|---|
| Mass M (kg) | 10.5 | 8.5 | 6.9 | 7 | 7.5 | 7.5 |
| Coefficient K | 0.75 | 0.61 | 0.49 | 0.5 | 0.55 | 0.55 |
| Number of spoke parts | 5 | 5 | 5 | 5 | 5 | 5 |
| Thickness (mm) | | | | | | |
| T1 | 24.5 | 27.9 | 18.6 | 18.8 | 22.1 | 21.5 |
| T2 | 2 | 2 | 2 | 2 | 2 | 2 |
| T2/T1 (%) | 8.1 | 7.2 | 10.8 | 10.6 | 9 | 9.3 |
| Area ratio A/S | 0.33 | 0.3 | 0.33 | 0.25 | 0.2 | 0.1 |
| Road noise dB(A) | 71.8 | 72.3 | 73.2 | 72.2 | 71.8 | 71.3 |

By decreasing the area ratio A/S to lass than 0.25, even in a light weight wheel whose weight index K is less than 0.55, it is possible to reduce the road noise to the substantially same level as a wheel whose weight index K has an ordinary value of about 0.7.

As described above, according to the present invention, even in a light weight wheel whose weight index K is in a range of from 0.35 to 0.55, the road noise can be reduced, namely both the noise reduction and weight reduction can be achieved.

## Claims

1. A light alloy wheel (1), comprising a rim (2) having bead seats (6) for tire beads (21), a hub (4) to be connected to an axle of an automobile, and a disk part (5) between the hub (4) and the rim (2), said disk part (5) comprising a plurality of spoke parts (15) extending radially from the hub (4) to the rim (2), and a plurality of fin parts (16) each extending between the adjacent spoke parts (15) and being thinner than the spoke parts,
**characterized by** having a mass (M) in kilogram, a nominal rim width (W) in inch and a nominal rim diameter (D) in inch which satisfy the following condition: 0.35 ≤ M / (W+D-10) ≤ 0.55, and in that the disk part (5) is provided between the spoke parts (15) with through openings (17), the openings (17) have a total frontal projected area (A) of not more than 25% of the area (S) of a circle whose diameter is equal to the nominal rim diameter (D), wherein the fin parts (16) extend from the hub (4) towards the rim (2) but terminate before the rim (2) so as to form said through openings (17) between the radially outer edges (16e) of the fin parts (16) and the radially inside of the rim (2).

2. A light alloy wheel according to claim 1, wherein the number of the spoke parts (15) is more than four.

3. A light alloy wheel according to claim 1, wherein the thickness (T2) of the fin parts (16) is not more than 15% of the thickness (T1) of the spoke parts (15).

4. A light alloy wheel according to claim 1, wherein the fin parts (16) are substantially flat and platy.

5. A light alloy wheel according to claim 1, wherein the radially outer edges (16e) of the fin parts (16) are convexly curved.

6. A light alloy wheel according to claim 5, wherein the radially outer edges (16e) of the fin parts (16) lie along a circle centered on the axis of the wheel.

## Patentansprüche

1. Leichtmetallrad (1), umfassend eine Felge (2) mit Wulstsitzen (6) für Reifenwülste (21), eine Nabe (4) zur Verbindung mit einer Achse eines Fahrzeugs, und einen Scheibenteil (5) zwischen der Nabe (4) und der Felge (2), wobei der Scheibenteil (5) mehrere Speichenteile (15), die sich radial von der Nabe (4) bis zu der Felge (2) erstrecken, und mehrere Rippenteile (16) umfasst, die sich jeweils zwischen den benachbarten Speichenteilen (15) erstrecken und dünner sind als die Speichenteile,
**dadurch gekennzeichnet, dass** es eine Masse (M) in Kilogramm, eine Nennfelgenbreite (W) in Zoll und einen Nennfelgendurchmesser (D) in Zoll aufweist, die die folgende Bedingung erfüllen: 0,35 ≤ M/(W+D-10) ≤ 0,55 und dass der Scheibenteil (5) zwischen den Speichenteilen (15) mit Durchgangsöffnungen (17) versehen ist, wobei die Öffnungen (17) eine vorspringende Gesamtfrontfläche (A) von nicht mehr als 25 % der Fläche (S) eines Kreises aufweisen, dessen Durchmesser gleich dem Nennfelgendurchmesser (D) ist, wobei die Rippenteile (16) sich von der Nabe (4) in Richtung der Felge (2) erstrecken aber vor der Felge (2) enden, um die Durchgangsöffnungen (17) zwischen den radial äußeren Rändern (16e) der Rippenteile (16) und der radialen Innenseite der Felge (2) zu bilden.

2. Leichtmetallrad nach Anspruch 1, wobei die Zahl der Speichenteile (15) mehr als vier beträgt.

3. Leichtmetallrad nach Anspruch 1, wobei die Dicke (T2) der Rippenteile (16) nicht mehr als 15 % der Dicke (T1) der Speichenteile (15) beträgt.

4. Leichtmetallrad nach Anspruch 1, wobei die Rippenteile (16) im Wesentlichen flach und platt sind.

5. Leichtmetallrad nach Anspruch 1, wobei die radial äußeren Kanten (16e) der Rippenteile (16) konvex gekrümmt sind.

6. Leichtmetallrad nach Anspruch 5, wobei die radial äußeren Kanten (16e) der Rippenteile (16) entlang eines Kreises liegen, der auf der Achse des Rades zentriert ist.

## Revendications

1. Roue en alliage léger (1), comprenant une jante (2) comportant des sièges de talon (6) pour des talons de pneu (21), un moyeu (4) à raccorder à un essieu d'un véhicule automobile, et une pièce en disque (5) entre le moyeu (4) et la jante (2), ladite pièce en disque (5) comprenant une pluralité de pièces formant rayons (15) s'étendant radialement du moyen (4) à la jante (2), et une pluralité de pièces formant nervures (16), chacune s'étendant entre les pièces formant rayons (15) adjacentes et étant plus mince que les pièces formant rayons,
**caractérisée en** ayant une masse (M) en kilogrammes, une largeur de jante nominale (W) en pouces et un diamètre de jante nominal (D) en pouces qui satisfont la condition suivante : 0,35 ≤ M/(W+D-10) ≤ 0,55, et en ce que la pièce en disque (5) est prévue entre les pièces formant rayons (15) avec des ouvertures traversantes (17), les ouvertures (17) ayant une surface projetée frontale totale (A) de pas plus de 25 % de l'aire (S) d'un cercle dont le diamètre est égal au diamètre de jante nominal (D), dans laquelle les pièces formant nervures (16) s'étendent du moyeu (4) vers la jante (2) mais se terminent avant la jante (2) de façon à former lesdites ouvertures traversantes (17) entre les bords radialement extérieurs (16e) des pièces formant nervures (16) et l'intérieur radial de la jante (2).

2. Roue en alliage léger selon la revendication 1, dans laquelle le nombre des pièces formant rayons (15) est supérieur à quatre.

3. Roue en alliage léger selon la revendication 1, dans laquelle l'épaisseur (T2) des pièces formant nervures (16) n'est pas supérieure à 15 % de l'épaisseur (T1) des pièces formant rayons (15) .

4. Roue en alliage léger selon la revendication 1, dans laquelle les pièces formant nervures (16) sont substantiellement plates et de type plaque.

5. Roue en alliage léger selon la revendication 1, dans laquelle les bords radialement extérieurs (16e) des pièces formant nervures (16) présentent une courbure convexe.

6. Roue en alliage léger selon la revendication 5, dans laquelle les bords radialement extérieurs (16e) des pièces formant nervures (16) sont situés le long d'un cercle centré sur l'axe de la roue.
